**Europäisches Patentamt**

**European Patent Office**

**Office européen des brevets**

(19)

(11) Veröffentlichungsnummer : **0 405 003 B1**

(12) # EUROPÄISCHE PATENTSCHRIFT

(45) Veröffentlichungstag der Patentschrift :
**13.01.93 Patentblatt 93/02**

(51) Int. Cl.$^5$ : **C01B 17/027,** C01B 17/04

(21) Anmeldenummer : **89112001.6**

(22) Anmeldetag : **30.06.89**

(54) **Verfahren und Vorrichtung zur Reinigung von Schwefel.**

(43) Veröffentlichungstag der Anmeldung :
**02.01.91 Patentblatt 91/01**

(45) Bekanntmachung des Hinweises auf die
Patenterteilung :
**13.01.93 Patentblatt 93/02**

(84) Benannte Vertragsstaaten :
**AT BE CH DE ES FR GB GR IT LI LU NL SE**

(56) Entgegenhaltungen :
**EP-A- 0 220 610**
**DE-A- 1 941 703**
**FR-A- 2 395 947**
**FR-A- 2 613 250**
**US-A- 2 941 868**
**US-A- 3 873 679**

(73) Patentinhaber : **BEB ERDGAS UND ERDÖL
GMBH
Riethorst 12 Postfach 51 03 60
W-3000 Hannover 51 (DE)**

(72) Erfinder : **Eng, Harald, Dr.
Konrad-Adenauer-Strasse 86
W-3320 Salzgitter 1 (DE)**

(74) Vertreter : **Barz, Peter, Dr. et al
Patentanwälte Dipl.-Ing. G. Dannenberg Dr. P.
Weinhold, Dr. D. Gudel Dipl.-Ing. S. Schubert,
Dr. P. Barz Siegfriedstrasse 8
W-8000 München 40 (DE)**

## Beschreibung

Die Erfindung betrifft ein Verfahren und eine Vorrichtung zur Konvertierung von verunreinigtem Schwefel, der vorzugsweise aus der Förderung von saurem Erdgas (Sauergas) stammt, zu Schwefel höchster Reinheit der Spezifikation "bright yellow".

Bei der Sauergasförderung fällt ein Polysulfid-Lagerstättenwasser-Gemisch an, das destillativ in Salzwasser, sogenannten "Ethylamin-Schwefel" und das als Schwefel-Lösungsmittel verwendete Monoethanolamin getrennt wird.

Ethylamin-Schwefel ist ein stark verunreinigter Schwefel von dunkler Färbung und relativ hohem Gehalt an $H_2S$ (300-400 mg $H_2S$/kg S) und anderen Verunreinigungen, wie Korrosionsinhibitoren, Kohlenwasserstoffen, Aminen, Lösungsmitteln und Organoschwefelverbindungen. Der Ethylamin-Schwefel konnte bisher innerhalb der Sauergas-Aufbereitungsanlagen nicht wieder in den Produktionsprozeß eingebracht werden, wie dies etwa bei der Wiederaufbereitung von bei der Erdölraffination anfallenden petrochemischen Slopse durch Beimischung in das zu verarbeitende Rohöl möglich ist. Als minderwertiger verschmutzter Schwefel wurde daher Ethylamin-Schwefel allenfalls zur Schwefelsäure-Herstellung eingesetzt.

Bekanntlich kann Schwefel aus $H_2S$-haltigen Gasen nach dem sogenannten Claus-Verfahren hergestellt werden, das durch folgende Gesamtgleichung wiedergegeben wird:

$$(1) \qquad 3 \, H_2S + 1{,}5 \, O_2 = 3 \, S + 3 \, H_2O$$

Diese Gesamtgleichung umfaßt verschiedene Teilreaktionen, von denen die folgenden die wichtigsten sind:

$$(2) \qquad H_2S + 1{,}5 \, O_2 = SO_2 + H_2O$$
$$(3) \qquad SO_2 + 2 \, H_2S = 3 \, S + 2 \, H_2O$$

Es wird somit zunächst 1/3 des $H_2S$ mit Sauerstoff zu $SO_2$ verbrannt, während die restlichen 2/3 mit dem gebildeten $SO_2$ gewöhnlich in Kontaktöfen zu Schwefel umgesetzt werden. Wegen weiterer Einzelheiten des Claus-Verfahrens wird auf Ullmanns Encyklopädie der technischen Chemie, 4. Auflage, Band 21, Seiten 8 ff, Verlag Chemie, Weinheim (1982) verwiesen.

Es ist auch bereits bekannt, im Claus-Verfahren flüssigen Schwefel einzusetzen und das für den Claus-Prozeß erforderliche $SO_2$ durch Verbrennung von Schwefel zu erzeugen. Dies kann verschiedene Gründe haben. So wird in der US-A-2 726 933 und der EP-A-220 610 flüssiger Schwefel zur Kühlung der $SO_2$-Verbrennungsgase eingesetzt. In der US-A-3 873 679 wird andererseits im Kreislauf rückgeführter Schwefel in einem Zweigstrom eines $H_2S$-armen Einsatzgases zu $SO_2$ verbrannt, um durch die hohe Wärmetönung des Verbrennungsprozesses die für die Claus-Reaktion erforderliche hohe Temperatur zu erzeugen, die bei niedrigen $H_2S$-Konzentrationen nicht erzielbar ist. In der DE-A-1 941 703 wird dieses Prinzip noch weitergeführt, indem sämtliches für den Claus-Prozeß erforderliche $SO_2$ durch Verbrennung von im Kreislauf zurückgeführtem Schwefel gewonnen und die Reaktion nach der obigen Gleichung (2) unterbunden wird. Bei diesen bekannten Verfahren spielt der Gesichtspunkt einer Reinigung von verunreinigtem Schwefel jedoch keine Rolle.

In der US-A-2 941 868 ist ein Verfahren zur Reinigung von Kohlenwasserstoffe enthaltendem Schwefel beschrieben, in dem man den verunreinigten Schwefel auf eine Temperatur erhitzt, bei der die enthaltenen Kohlenwasserstoffe mit dem Schwefel zu Kohlenstoff-Schwefel-Verbindungen und $H_2S$ reagieren. Anschließend werden die Kohlenstoff-Schwefel-Verbindungen destillativ von dem flüssigen Schwefel abgetrennt und mit Sauerstoff zu $SO_2$ verbrannt, welches z. B. in einem Claus-Ofen mit dem in der ersten Stufe entstandenen $H_2S$ reagiert. Der dabei entstehende Schwefel wird schließlich mit dem vorher abdestillierten Schwefel vereinigt.

Aufgabe der Erfindung ist es, ein Verfahren zur Konvertierung von verunreinigtem Schwefel aus der Sauergasförderung zu Schwefel höchster Reinheit bereitzustellen, das in die Verfahrensabläufe bei der Sauergasaufbereitung integriert werden kann, leicht regelbar ist und ausgehend z. B. von stark verunreinigtem Ethylamin-Schwefel hochreinen Schwefel ohne störende Beeinflußung des "normalen" Claus-Prozesses liefert.

Eine weitere Aufgabe besteht darin, eine Vorrichtung zur Durchführung dieses Verfahrens bereitzustellen.

Die erstgenannte Aufgabe wird nach der Erfindung mit einem Verfahren gelöst, das dadurch gekennzeichnet ist, daß man den verunreinigten Schwefel in einem mit einem Claus-Ofen gekoppelten Schwefelbrenner autotherm bei Temperaturen von etwa 800 bis 1700°C mit einem Sauerstoff enthaltenden Gas verbrennt, das entstandene $SO_2$ in die Brennkammer des Claus-Ofens einleitet, in der ein Teil des im Claus-Einsatzgas enthaltenen $H_2S$ mit einem Sauerstoff enthaltenden Gas zu $SO_2$ oxidiert wird, und das restliche $H_2S$ mit dem $SO_2$ unter den Bedingungen der Claus-Reaktion zu Schwefel höchster Reinheit umsetzt, wobei dem Schwefelbrenner und der Brennkammer des Claus-Ofens über eine gemeinsame Zufuhrleitung eine Gesamtmenge an Sauerstoff enthaltendem Gas zugeleitet wird, die ausreichend ist, um den verunreinigten Schwefel zu verbrennen und das im Claus-Einsatzgas enthaltene $H_2S$ in Schwefel zu überführen.

In einer bevorzugten Ausführungsform entspricht die dem Schwefelbrenner und der Brennkammer des Claus-Ofens zugeführte Gesamtmenge an Sauerstoff enthaltendem Gas der nach der Claus-Reaktion (1) stöchiometrisch erforderlichen Menge zur Umwandlung des im Claus-Einsatzgas enthaltenen $H_2S$ in Schwefel.

Zur Verbrennung des Schwefels und der darin enthaltenen Verunreinigungen wird der Schwefelbrenner gewöhnlich überstöchiometrisch mit einem solchen Überschuß an Sauerstoff enthaltendem Gas gefahren, daß das Abgas des Schwefelbrenners 1 bis 3, vorzugsweise 1,5 bis 2 Vol.-% Sauerstoff enthaltendes Gas enthält.

Die Zufuhr des Sauerstoff enthaltenden Gases, gewöhnlich Luft oder mit Sauerstoff angereicherte Luft, über eine gemeinsame Versorgungsleitung, die über Zweigleitungen an den Schwefelbrenner bzw. den Claus-Ofen angeschlossen ist, gestattet eine einfache und leichte Regelbarkeit des Gesamtverfahrens.

Hierbei wird dem Schwefelbrenner vorzugsweise eine Teilmenge von 1 bis 20, insbesondere 1 bis 10 und besonders bevorzugt 2 bis 5 Vol.-% der Gesamtmenge an Sauerstoff enthaltendem Gas zugeführt.

Der Schwefelbrenner und die Brennkammer des Claus-Ofens werden im allgemeinen bei Temperaturen von etwa 800 bis 1700°C, vorzugsweise etwa 1100 bis 1400°C, und einem Druck von etwa 1 bis 2 barg betrieben, wobei der Druck in dem Schwefelbrenner vorzugsweise 0,01 bis 0,2 bara höher liegt als im Claus-Ofen, um einen einwandfreien Gastransport in den Claus-Ofen zu gewährleisten.

Der verunreinigte Schwefel kann in fester oder vorzugsweise flüssiger Form in den Schwefelbrenner eingesprüht werden. Die Zerstäubung dient der Oberflächenvergrößerung und schafft die Voraussetzung für einen größtmöglichen Umsatz beim Verbrennungsprozeß. Die Zerstäubung kann z. B. durch Verdüsen des ca. 130-160 °C heißen Flüssigschwefels bei erhöhtem Druck von ca. 12-15 bara oder auch mit Hilfe eines Zerstäubermediums, wie Stickstoff oder Wasserdampf von 3-8 bara, erfolgen.

Die Schwefelverbrennung verläuft autotherm, da aufgrund der exothermen Verbrennungsreaktion zu $SO_2$ keine Fremdwärme in den Prozeß eingebracht werden muß. Lediglich beim Anfahren des Schwefelbrenners ist Fremdwärme zum Aufheizen der Brennkammer auf Temperaturen oberhalb der Schwefel-Zündtemperatur (440-460 °C) erforderlich, die z. B. mit Hilfe eines separaten Heizgasbrenners in der Brennkammer zugeführt werden kann. Nach Erreichen der Prozeßtemperatur von ca. 800 °C und Starten der Schwefelverbrennung erhöht sich die Brennkammertemperatur durch die freiwerdende Wärmemenge zügig bis zu dem aus dem vorgegebenen Verhältnis von Schwefel- zu Sauerstoffmenge resultierenden Temperaturmaximum. Ein weiterer Betrieb des Heizgasbrenners ist nach erfolgter stabiler übernahme auf Schwefelbetrieb nicht notwendig.

Das $SO_2$ enthaltende Abgas aus dem Schwefelbrenner wird vorzugsweise unter den vom Lastzustand des Schwefelbrenners abhängigen Bedingungen adiabatisch in die Brennkammer des Claus-Ofens überführt. Die Einleitung des $SO_2$-Abgases sollte dabei möglichst dicht am Sauergasbrenner des Claus-Ofens tangential zur Claus-Brennkammer erfolgen, um eine effektive Durchmischung der Reaktionsgasströme zu erzielen und Kanalbildungen im Reaktionsraum zu vermeiden. Gleichzeitig steht damit das $SO_2$ der von der Prozeßführung her mit Sauerstoff-Unterschuß eingeleiteten Claus-Reaktion in der heißen Gasreaktionszone der Claus-Brennkammer sehr früh als Sauerstoffersatz zur Umsetzung mit $H_2S$ nach obiger Gleichung (3) zur Verfügung und aufgrund der maximalen Verweilzeit wird eine gute Gleichgewichts-Einstellung erzielt.

Das in den Claus-Ofen eingeleitete Claus-Einsatzgas enthält gewöhnlich 10 bis 70 Vol.-% $H_2S$. Eine typische Zusammensetzung ist z. B. 46 Vol.-% $H_2S$, 48 Vol.-% $CO_2$, 2 Vol.-% $CH_4$ und 4 Vol.-% $H_2O$.

Abgesehen von den geschilderten erfindungsgemäßen Modifikationen wird die Claus-Reaktion auf an sich bekannte Weise durchgeführt. Wegen näherer Einzelheiten hinsichtlich der verwendbaren Katalysatoren, Claus-Reaktoren, Kontaktöfen etc. wird auf Ullmanns Encyklopädie der technischen Chemie, loc. cit., und andere Literatur zum Claus-Prozeß Bezug genommen.

Der aus dem Claus-Ofen und/oder den nachgeschalteten Kontaktöfen abgezogene Schwefel ist überraschenderweise trotz des hohen Verunreinigungsgrades des eingesetzten Ethylamin-Schwefels von höchster Reinheit und genügt der nachfolgenden Spezifikation für die Qualität "bright yellow":

| Spezifikationsmerkmal | Grenzwert | Typischer Wert |
|---|---|---|
| Reinheit (Gew.-% S) | mind. 99,9 | > 99,97 |
| Farbe | hellgelb | |
| Asche (Glührückstand) | max. 0,015 | 0,002-0,01 |
| Kohlenstoff (Gew.-%) | max. 0,02 | 0,01 |
| Acizität (Gew.-% $H_2SO_4$) | max. 0,01 | 0,01 |
| Arsen (mg/kg S) | max. 5 | < 5 |
| Selen (mg/kg S) | max. 5 | < 5 |
| Tellur (mg/kg S) | max. 5 | < 5 |
| $H_2S$ (mg/kg S) | max. 10 | < 10 |
| Wasser (Gew.-%) | | 0,01-0,05 |

Das erfindungsgemäße Verfahren bietet somit erstmals die Möglichkeit, den stark verunreinigten Ethylamin-Schwefel aus der Sauergasförderung zu entsorgen und in ein hochwertiges Produkt zu überführen. Dies gelingt zudem auf eine prozeßtechnisch elegante und regelungstechnisch einfache Weise durch Ankoppelung an die herkömmliche Sauergas-Aufbereitung, die ohnehin prozeßbedingt hauptsächlich hochwertigen Verkaufsschwefel liefert.

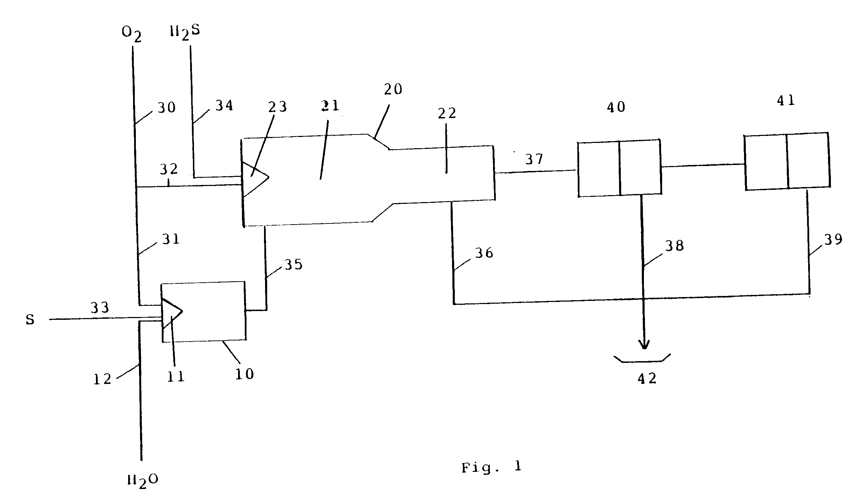

Gegenstand der Erfindung ist ferner die in Fig. 1 schematisch dargestellte Vorrichtung zur Durchführung des erfindungsgemäßen Verfahrens, die gekennzeichnet ist durch

- einen Schwefelbrenner (10) mit einer Einspritzlanze (11) für flüssigen Schwefel;
- einen Claus-Ofen (20) mit einer Brennkammer (21) und einer Kondensationszone (22), z. B. einem Abhitzekessel, sowie einem Sauergasbrenner (23);
- eine Zufuhrleitung (30), die über Zweigleitungen (31) und (32) Sauerstoff enthaltendes Gas dem Schwefelbrenner (10) bzw. dem Claus-Ofen (20) zuführt;
- eine Zufuhrleitung (33) für flüssigen Schwefel zur Einspritzlanze (11) des Schwefelbrenners (10);
- eine Zufuhrleitung (34) für $H_2S$ enthaltendes Einsatzgas zum Sauergasbrenner (23) des Claus-Ofens (20);
- eine Abgasleitung (35), die das $SO_2$ enthaltende Abgas des Schwefelbrenners (10) dem Claus-Ofen (20) an einer Stelle nahe dem Sauergasbrenner (23) zuführt; und
- eine Ableitung (36) für kondensierten hochreinen Schwefel.

Falls der flüssige verunreinigte Schwefel mit Hilfe eines Zerstäubermediums, wie Wasserdampf oder Stickstoff, in den Schwefelbrenner (10) eingedüst wird, ist eine zusätzliche Zufuhrleitung (12) für das Zerstäubermedium vorhanden, die koaxial in der Einspritzlanze (11) mündet.

Zur weiteren Umsetzung des Claus-Reaktionsgases ist der Claus-Ofen (20) über die Leitung (37) mit einem oder mehreren Claus-Kontaktöfen (40, 41) verbunden, die analog zum Claus-Ofen (20) Reaktions- und Kondensationszonen aufweisen. Der kondensierte hochreine Schwefel wird aus diesen Kontaktöfen durch Ableitungen (38, 39) abgeleitet und zusammen mit dem über Leitung (36) abgezogenen Reinstschwefel der Schwefelgrube (42) zugeführt.

**Patentansprüche**

1. Verfahren zur Konvertierung von verunreinigtem Schwefel aus der Sauergasförderung zu Schwefel höchster Reinheit, dadurch gekennzeichnet, daß man den verunreinigten Schwefel in einem mit einem Claus-Ofen gekoppelten Schwefelbrenner autotherm bei Temperaturen von etwa 800 bis 1700°C mit einem Sauerstoff enthaltenden Gas verbrennt, das entstandene $SO_2$ in die Brennkammer des Claus-Ofens einleitet, in der ein Teil des im Claus-Einsatzgas enthaltenen $H_2S$ mit einem Sauerstoff enthaltenden Gas zu $SO_2$ oxidiert wird, und das restliche $H_2S$ mit dem $SO_2$ unter den Bedingungen der Claus-Reaktion zu Schwefel höchster Reinheit umsetzt, wobei dem Schwefelbrenner und der Brennkammer des Claus-Ofens über eine gemeinsame Zufuhrleitung eine Gesamtmenge an Sauerstoff enthaltendem Gas zugeleitet wird, die ausreichend ist, um den verunreinigten Schwefel zu verbrennen und das im Claus-Einsatzgas enthaltene $H_2S$ in Schwefel zu überführen.

4

2. Verfahren nach Anspruch 1, dadurch gekennzeichnet, daß die dem Schwefelbrenner und der Brennkammer des Claus-Ofens zugeführte Gesamtmenge an Sauerstoff enthaltendem Gas der nach der Claus-Reaktion stöchiometrisch erforderlichen Menge zur Umwandlung des im Claus-Einsatzgas enthaltenen $H_2S$ in Schwefel entspricht.

3. Verfahren nach Anspruch 1 oder 2, dadurch gekennzeichnet, daß dem Schwefelbrenner eine solcher Überschuß an Sauerstoff enthaltendem Gas zugeführt wird, daß das Abgas des Schwefelbrenners 1 bis 3, vorzugsweise 1,5 bis 2 Vol.-% Sauerstoff enthaltendes Gas enthält.

4. Verfahren nach einem der Ansprüche 1 bis 3, dadurch gekennzeichnet, daß dem Schwefelbrenner eine Teilmenge von 1 bis 20, vorzugsweise 1 bis 10 Vol.-% der Gesamtmenge an Sauerstoff enthaltendem Gas zugeführt wird.

5. Verfahren nach einem der Ansprüche 1 bis 4, dadurch gekennzeichnet, daß der Schwefelbrenner und die Brennkammer des Claus-Ofens bei Temperaturen von etwa 800 bis 1700°C, vorzugsweise etwa 1100 bis 1400°C, und einem Druck von etwa 1 bis 2 barg betrieben werden, wobei der Druck in dem Schwefelbrenner vorzugsweise 0,01 bis 0,2 bara höher liegt als im Claus-Ofen.

6. Verfahren nach einem der Ansprüche 1 bis 5, dadurch gekennzeichnet, daß der verunreinigte Schwefel in fester oder vorzugsweise flüssiger Form in den Schwefelbrenner eingesprüht wird.

7. Verfahren nach einem der Ansprüche 1 bis 6, dadurch gekennzeichnet, daß das Abgas des Schwefelbrenners adiabatisch in die Brennkammer des Claus-Ofens überführt wird.

8. Verfahren nach einem der Ansprüche 1 bis 7, dadurch gekennzeichnet, daß das Abgas des Schwefelbrenners nahe dem Brenner der Claus-Brennkammer tangential eingeleitet wird.

9. Vorrichtung zur Durchführung des Verfahrens nach Anspruch 1, gekennzeichnet durch
   - einen Schwefelbrenner (10) mit einer Einspritzlanze (11) für flüssigen Schwefel;
   - einen Claus-Ofen (20) mit einer Brennkammer (21) und einer Kondensationszone (22) sowie einem Sauergasbrenner (23);
   - eine Zufuhrleitung (30), die über Zweigleitungen (31) und (32) Sauerstoff enthaltendes Gas dem Schwefelbrenner (10) bzw. dem Claus-Ofen (20) zuführt;
   - eine Zufuhrleitung (33) für flüssigen Schwefel zur Einspritzlanze (11) des Schwefelbrenners (10);
   - eine Zufuhrleitung (34) für $H_2S$ enthaltendes Einsatzgas zum Sauergasbrenner (23) des Claus-Ofens (20);
   - eine Abgasleitung (35), die das $SO_2$ enthaltende Abgas des Schwefelbrenners (10) dem Claus-Ofen (20) an einer Stelle nahe dem Sauergasbrenner (23) zuführt; und
   - eine Ableitung (36) für kondensierten hochreinen Schwefel.

10. Vorrichtung nach Anspruch 9, dadurch gekennzeichnet, daß der Claus-Ofen (20) über eine Leitung (37) mit einem oder mehreren Claus-Kontaktöfen (40, 41, 42) verbunden ist, die ihrerseits Ableitungen (38, 39) für kondensierten hochreinen Schwefel aufweisen.

11. Vorrichtung nach Anspruch 9 oder 10, dadurch gekennzeichnet, daß sie zusätzlich eine koaxial in der Einspritzlanze (11) des Schwefelbrenners (10) mündende Zufuhrleitung (12) für ein Zerstäubermedium aufweist.

## Claims

1. A process for the conversion of impure sulfur from acid gas production to obtain sulfur of highest purity, characterized in that the impure sulfur is autothermally combusted in a sulfur burner coupled with a Claus furnace at temperatures of from 800 to 1700°C with an oxygen-containing gas, the resulting $SO_2$ is fed to the combustion chamber of the Claus furnace in which a part of the $H_2S$ contained in the Claus feed gas is oxidized with an oxygen-containing gas to $SO_2$, and the remaining $H_2S$ together with the $SO_2$ is converted to sulfur of highest purity under the conditions of the Claus reaction, wherein a total amount of oxygen-containing gas, sufficient to combust the impure sulfur and convert the $H_2S$ contained in the Claus feed gas to sulfur, is fed to the sulfur burner and combustion chamber of the Claus furnace via a common feed line.

2. A process according to claim 1, characterized in that the total amount of oxygen-containing gas fed to the sulfur burner and combustion chamber of the Claus furnace corresponds to the amount stoichiometrically required to convert the $H_2S$ contained in the Claus feed gas to sulfur.

3. A process according to claim 1 or 2, characterized in that the sulfur burner is fed with an excess amount of oxygen-containing gas sufficient to ensure that the exhaust gas of the sulfur burner contains 1 to 3, preferably 1,5 to 2 vol.% of oxygen-containing gas.

4. A process according to any of claims 1 to 3, characterized in that the sulfur burner is fed with a partial amount of from 1 to 20, preferably 1 to 10 vol.-% of the total amount of oxygen-containing gas.

5. A process according to any of claims 1 to 4, characterized in that the sulfur burner and combustion chamber of the Claus furnace are operated at temperatures of from 800 to 1700°C, preferably about 1100 to 1400°C, and a pressure of from 1 to 2 barg, the pressure in the sulfur burner preferably being 0.01 to 0.2 bara above that in the Claus furnace.

6. A process according to any of claims 1 to 5, characterized in that the impure sulfur is sprayed into the sulfur burner in solid or preferably liquid state.

7. A process according to any of claims 1 to 6, characterized in that the exhaust gas of the sulfur burner is adiabatically conveyed to the combustion chamber of the Claus furnace.

8. A process according to any of claims 1 to 7, characterized in that the exhaust gas of the sulfur burner is fed tangentially close to the burner of the Claus combustion chamber.

9. An apparatus suitable to carry out the process according to claim 1, characterized by
   - a sulfur burner (10) with an injection lance (11) for liquid sulfur;
   - a Claus furnace (20) having a combustion chamber (21) and a condensation zone (22) as well as an acid gas burner (23);
   - a feed line (30) which, by means of branch lines (31) and (32), supplies oxygen-containing gas to the sulfur burner (10) and the Claus furnace (20):
   - a line (33) for feeding liquid sulfur to the injection lance (11) of the sulfur burner (10); a line (34) for feeding $H_2S$-containing gas to the sulfur burner (10) of the Claus furnace (20) at a position close to the acid gas burner (23); and
   - a discharge line (36) for condensed sulfur of highest purity.

10. An apparatus according to claim 9, characterized in that the Claus furnace (20) is connected, via a line (37), to one or several Claus contact furnaces (40, 41, 42) which, likewise, have discharge lines (38, 39) for condensed sulfur of highest purity.

11. An apparatus according to claim 9 or 10, characterized in that it additionally comprises a feed line (12) for a vaporizer medium which feed line extends coaxially into the injection lance (11) of the sulfur burner (10).

**Revendications**

1. Procédé de conversion du soufre souillé provenant de l'extraction du gaz sulfureux en soufre purissime, caractérisé en ce qu'on brûle le soufre souillé, de façon auto-therme, dans un brûleur à soufre couplé à un four Claus à des températures d'environ 800 à 1700°C avec un gaz contenant de l'oxygène, qu'on introduit le $SO_2$ formé dans la chambre de combustion du four Claus dans laquelle une partie de l'$H_2S$ contenu dans la charge gazeuse Claus est oxydée en $SO_2$ avec un gaz contenant de l'oxygène et qu'on transforme l'$H_2S$ résiduel avec le $SO_2$ dans les conditions de la réaction de Claus en soufre purissime, une quantité totale de gaz contenant de l'oxygène étant admise dans le brûleur à soufre et dans la chambre de combustion du four Claus à travers une conduite d'alimentation commune, qui est suffisante pour brûler le soufre souillé et transformer en soufre l'$H_2S$ contenu dans la charge gazeuse Claus.

2. Procédé selon la revendication 1, caractérisé en ce que la quantité totale de gaz contenant de l'oxygène admise dans le brûleur à soufre et dans la chambre de combustion du four Claus correspond à la quantité stoechiométriquement nécessaire, selon la réaction de Claus, pour la conversion en soufre de l'$H_2S$ contenu dans la charge gazeuse Claus.

3. Procédé selon la revendication 1 ou 2, caractérisé en ce qu'on envoie dans le brûleur à soufre un excès de gaz contenant de l'oxygène tel que le gaz d'échappement du brûleur à soufre contienne 1 à 3, de préférence 1,5 à 2% en volume de gaz contenant de l'oxygène.

4. Procédé selon les revendications 1 à 3, caractérisé en ce qu'une quantité partielle de 1 à 20, de préférence de 2 à 10% en volume de la quantité totale de gaz contenant de l'oxygène est admise dans le brûleur à soufre.

5. Procédé selon les revendications 1 à 4, caractérisé en ce que le brûleur à soufre et la chambre de combustion du four Claus sont exploités à des températures d'environ 800 à 1700°C, de préférence d'environ 1100 à 1400°C et sous une pression d'environ 1 à 2 bars manométriques, la pression dans le brûleur à soufre se situant de préférence à un niveau de de 0,01 à 0,2 bars absolus supérieur à celui du four Claus.

6. Procédé selon les revendications 1 à 5, caractérisé en ce que le soufre souillé est injecté dans le brûleur à soufre à l'état solide ou, de préférence à l'état liquide.

7. Procédé selon les revendications 1 à 6, caractérisé en ce que le gaz d'échappement du brûleur à soufre est transféré de façon adiabatique dans la chambre de combustion du four Claus.

8. Procédé selon les revendications 1 à 7, caractérisé en ce que le gaz d'échappement du brûleur à soufre est introduit tangentiellement au voisinage du brûleur de la chambre de combustion Claus.

9. Dispositif pour la réalisation du procédé selon la revendication 1, caractérisé par
   - un brûleur à soufre (10) équipé d'une lance d'injection (11) pour le soufre liquide ;
   - un four Claus(20) comportant une chambre de combustion (21) et une zone de condensation (22) ainsi qu'un brûleur à gaz sulfureux (23) ;
   - une conduite d'alimentation (30) qui achemine, à travers des dérivations (31) et (32) du gaz contenant de l'oxygène vers le brûleur à soufre (10), respectivement vers le four Claus (20);
   - une conduite d'alimentation (33) pour le soufre liquide destinée à la lance d'injection (11) du brûleur à soufre (10) ;
   - une conduite d'alimentation (34) pour la charge gazeuse contenant $H_2S$ destinée au brûleur à gaz acide (23) du four Claus (20) ;
   - une conduite d'échappement (35) qui achemine le gaz d'échappement contenant $SO_2$ du brûleur à soufre (10) vers le four Claus (20) en un endroit proche du brûleur à gaz acide (23) et
   - une canalisation de départ (36) pour le soufre purissime condensé.

10. Dispositif selon la revendication 9, caractérisé en ce que le four Claus (20) est relié, par l'intermédiaire d'une canalisation (37), à un ou plusieurs fours de contact Claus (40, 41, 42) qui, de leur côté, comportent des canalisations de départ (38, 39) pour le soufre purissime condensé.

11. Dispositif selon la revendication 9 ou 10, caractérisé en ce qu'il comporte en outre une conduite d'alimentation (12) pour un milieu de pulvérisation débouchant coaxialement dans la lance d'injection (11) du brûleur à soufre (10).

Fig. 1